Europäisches Patentamt

European Patent Office

Office européen des brevets

(11) Veröffentlichungsnummer: **0 408 950 A1**

# (12) EUROPÄISCHE PATENTANMELDUNG

(21) Anmeldenummer: 90112424.8

(22) Anmeldetag: 29.06.90

(51) Int. Cl.⁵: **B61H 7/08**

(30) Priorität: 21.07.89 CH 2745/89

(43) Veröffentlichungstag der Anmeldung:
23.01.91 Patentblatt 91/04

(84) Benannte Vertragsstaaten:
AT BE CH DE FR GB IT LI NL

(71) Anmelder: Werkzeugmaschinenfabrik
Oerlikon-Bührle AG

Birchstrasse 155
CH-8050 Zürich(CH)

(72) Erfinder: Müller, Walter
Rebenweg 10
CH-8303 Bassersdorf(CH)
Erfinder: Koller, Max
Lägerenstrasse 17
CH-8165 Schleinikon(CH)

(54) Vorrichtung zum Ein- und Ausschalten einer Permanentmagnet-Schienenbremse.

(57) Zum Ein- und Ausschalten einer Permanentmagnet-Schienenbremse für ein Schienenfahrzeug sind relativ grosse Kräfte erforderlich, die entweder mit einem Hydromotor oder mit einem Elektromotor erzeugt werden. Bei Schienenfahrzeugen ohne elektrische oder hydraulische Anschlüsse, die lediglich eine pneumatische Bremsleitung aufweisen, wird daher eine pneumatisch angetriebene Hydropumpe (10,27) eingebaut, mit welcher ein Hydromotor (9) angetrieben werden kann. Dieser Hydromotor (9) ist dann in der Lage, die erforderlichen Kräfte zum Ein- und Ausschalten der Permanentmagnet-Schienenbremse (21) aufzubringen. Vorzugsweise wird der Ein- und Ausschaltvorgang durch die Hauptleitung (110) gesteuert.

EP 0 408 950 A1

## VORRICHTUNG ZUM EIN- UND AUSSCHALTEN EINER PERMANENTMAGNET-SCHIENENBREMSE.

Die Erfindung betrifft eine Vorrichtung zum Ein- und Ausschalten einer Permanentmagnet-Schienenbremse für ein Schienenfahrzeug, das ausschliesslich mit einer pneumatischen Hauptleitung und einer pneumatischen Speiseleitung ausgerüstet ist.

Zum Ein- und Ausschalten einer Permanent-Schienenbremse sind relativ grosse Kräfte erforderlich, die entweder mit einem Elektromotor oder mit einem Hydromotor erzeugt werden.

Eine solche Permanentmagnet-Schienenbremse muss zum Bremsen einerseits auf die Schienen, auf denen das Fahrzeug fährt, abgesenkt werden. Dies geschieht im allgemeinen pneumatisch entgegen der Kraft einer Feder, welche das Bestreben hat, die Schienenbremse anzuheben. Andererseits muss ein drehbarer Permanentmagnet zwischen zwei Schenkeln oder Polstücken um ca. 90° gedreht werden, um den Magnetfluss durch die Schienen zu leiten, wodurch die Bremsen mit voller Kraft an die Schiene gezogen werden und das Fahrzeug vollständig abgebremst wird. Zum Drehen des Permanentmagneten zwischen den Polstücken sind die oben erwähnten grossen Kräfte erforderlich, die sich pneumatisch nur mit Zylindern und Kolben von sehr grossem Durchmesser aufbringen lassen.

Es ist nun schwierig, mit einem pneumatischen Antrieb diese Kräfte aufzubringen, ohne dass dieser pneumatische Antrieb sehr viel Raum beansprucht.

Die Aufgabe, die mit der vorliegenden Erfindung gelöst werden soll, besteht nun in der Schaffung einer Vorrichtung, zum Ein- und Ausschalten einer Permanentmagnet-Schienenbremse für ein Schienenfahrzeug, das keine elektrischen oder hydraulischen Anschlüsse aufweist, welche die erforderlichen Schaltkräfte aufbringt, ohne dass die Vorrichtung viel Platz beansprucht.

Die Vorrichtung, mit der diese Aufgabe gelöst wird, weist die Merkmale des Anspruches 1 auf.

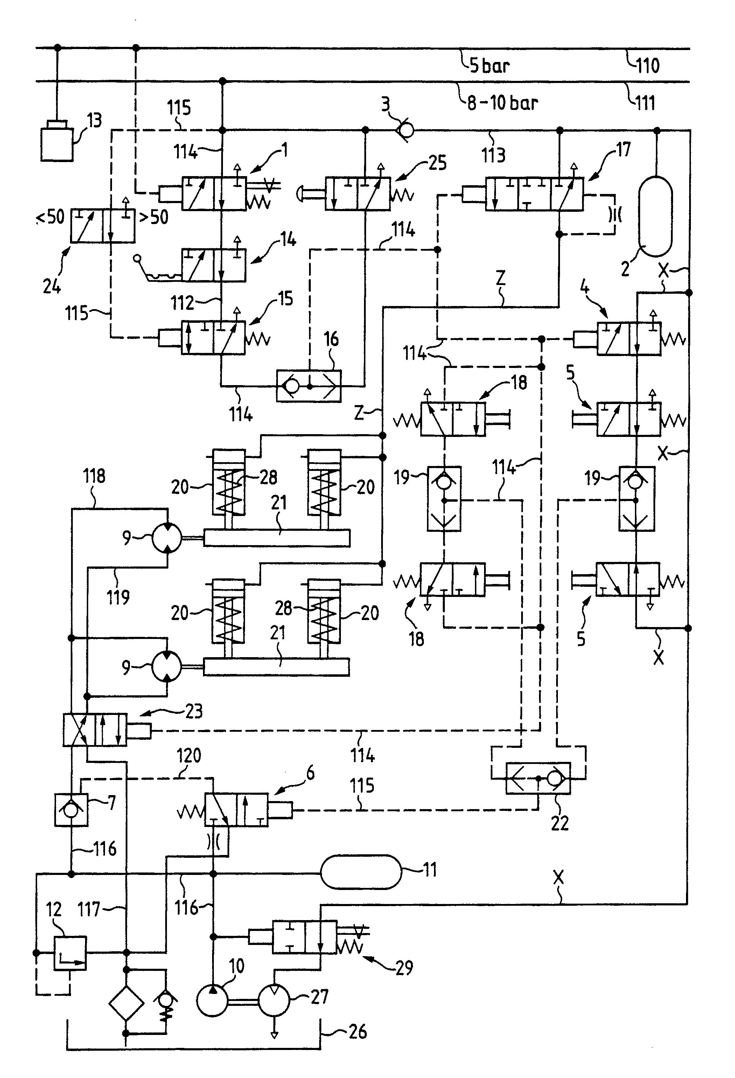

Ein Ausführungsbeispiel der erfindungsgemässen Bremsvorrichtung ist im folgenden anhand der beigefügten Zeichnung ausführlich beschrieben.

Die einzige Figur zeigt schematisch den gesamten Aufbau der Bremsvorrichtung.

Gemäss dieser einzigen Figur weist die Bremsvorrichtung eine Hauptluftleitung 110 und eine Speiseleitung 111 auf. In der Speiseleitung 111 herrscht ein Druck von 8 - 10 bar. Bei gelöster Bremse herrscht in der Hauptluftleitung ein Druck von 5 bar. Zum Bremsen wird der Druck in der Hauptluftleitung 110 in üblicher Weise z.B. auf unter 3 bar abgesenkt. Ein Steuerventil 1 ist durch die Hauptluftleitung 110 betätigbar. Bei gelöster Bremse ist das Steuerventil 1 geschlossen, d.h. der Druck aus der Speiseleitung 111 ist abgesperrt und die Leitung 112 ist drucklos. An die Speiseleitung 111 ist ferner über ein Rückschlagventil 3 ein Druckluftbehälter 2 angeschlossen, der ständig auf dem Druck der Speiseleitung 111 aufgefüllt ist. Ausserdem ist an die Speiseleitung 111 über das genannte Rückschlagventil 3 ein Druckübersetzer 17 angeschlossen. Die Wirkungsweise eines solchen Druckübersetzers 17 wird hier als bekannt vorausgesetzt. Bei sinkendem Druck in der Hauptluftleitung 110 wächst der vom Druckübersetzer 17 erzeugte Druck. Dieser Druckübersetzer 17 ist ferner über ein Handventil 25 und über ein Doppelrückschlagventil 16 mit Druckluft aus der Speiseleitung 111 beaufschlagbar. Ausserdem ist der Druckübersetzer 17 über das Steuerventil 1, über ein Ventil 15 und über das Doppelrückschlagventil 16 an die Speiseleitung 111 angeschlossen. Dieser Druckübersetzer 17 dient zum Absenken einer Schienenbremse 21 und ist über Leitung Z mit Senkzylindern 20 der Schienenbremse 21 verbunden. Der Druckübersetzer 17 ist somit über Leitung 113 ständig an die Speiseleitung 111 angeschlossen und kann wahlweise über Leitung 114 an die Speiseleitung 111 angeschlossen oder entlüftet werden. Der Druckübersetzer 17 liefert nur einen Druck in Leitung Z, wenn er sowohl über Leitung 113 als auch über Leitung 114 mit Speiseleitungsdruck beaufschlagt ist. Das Ventil 15 wird durch den Speiseleitungsdruck über Leitung 115 offengehalten. Schliesslich ist an die Speiseleitung 111 über die Leitung X und über ein Ventil 29 ein pneumatischer Motor 27 angeschlossen, der eine Hydropumpe 10 antreibt, welche daher ständig einen hydraulischen Druck in Leitung 116 liefert. Ein Umkehrventil 4, das durch den Druck in der Leitung 114 steuerbar ist, befindet sich in der Leitung X, die zu zwei Microventilen 5 führt. Die Leitung 114 führt ausserdem direkt zu zwei weiteren Microventilen 18. Sowohl die beiden Microventile 5 als auch die beiden Microventile 18 sind über je ein Doppelrückschlagventil 19 an ein gemeinsames weiteres Doppelrückschlagventil 22 angeschlossen, das über Leitung 114 an ein Sitzventil 6 angeschlossen ist. Somit lässt sich das Sitzventil 6 sowohl durch die beiden Microventile 5 als auch durch die beiden Microventile 18 steuern. Schliesslich ist noch ein Wegeventil 23 durch den Druck in der Leitung 114 steuerbar. Mit Hilfe dieses Wegeventiles 23 lassen sich die Drehrichtungen zweier Hydromotoren 9 umkehren. Diese beiden Hydromotoren 9 sind über Leitung 116 an die erwähnte Hydropumpe 10 angeschlossen. Eine Leitung 117 führt von den beiden Hydromotoren zu einem Hydraulikbehälter 26. Mit dem Wegeventil 23 lässt sich die Verbindung der Zuleitung 116 und der Rückleitung 117 mit den Anschlussleitungen 118 und 119 zu den Hydromotoren vertauschen.

Mit Hilfe der Hydromotoren 9 lassen sich die Permanentmagneten der beiden Schienenbremsen 21 in üblicher Weise ein- und ausschalten. Die vier Microventile 5 und 18 sind in der Stellung gezeichnet, die sie bei angezogener Bremse 21 einnehmen. Bei gelöster Bremse ist durch die Microventile 18 die Leitung 114 offen und durch die Microventile 5 ist bei gelöster Bremse 21 die Leitung X geschlossen.

In die Leitung 116 ist ein Sperrventil 7 eingesetzt, das sich durch das erwähnte Sitzventil 6 betätigen lässt. Dieses Sitzventil 6 ist in eine Leitung 116 und 120 eingebaut, welche von der Hydropumpe 10 zum Sperrventil 7 führen. Mit dem Hydromotor 10 wird über Leitung 116 auch ein Speicher 11 mit Drucköl gefüllt. Ein Druckbegrenzungsventil 12 verhindert, dass der Speicher 11 überladen wird. Ein Schnellbremsbeschleuniger 13 ermöglicht die Entlüftung der Hauptleitung 110, wodurch der Bremsvorgang beschleunigt wird. Ein Bremsdruckregler 24 ermöglicht die Öffnung und Unterbrechung der Leitung 115. Bei unterbrochener Leitung 115 ist das Ventil 15 geschlossen, bei geöffneter Leitung 115 ist das Ventil 15 offen.

Die Wirkungsweise der beschriebenen Bremsvorrichtung ist wie folgt:

Bei gelöster Bremse befindet sich das Steuerventil 1 in der geschlossenen Stellung und die Leitung 112 ist drucklos. Aus der Speiseleitung 111 gelangt die Druckluft zum Vorratsbehälter 2, zum Druckübersetzer 17 und zum pneumatischen Motor 27 der Hydropumpe 10. Diese Pumpe 10 arbeitet so lange, bis der gewünschte Druck im Hydrospeicher 11 erreicht ist und stellt automatisch ab. Da die Leitung 112 drucklos ist, ist auch die Leitung 114 drucklos und das Umkehrventil 4 ist geöffnet, sodass Druckluft aus Leitung X bis zu den Microventilen 5 gelangen kann. Da bei gelöster Bremse die Microventiie 5 geschlossen sind, ist auch das Sitzventil 6 geschlossen und das Sperrventil 7 offen. Das Druckventil 12 verhindert, dass der Speicher 11 zu stark gefüllt wird und ermöglicht eine Druckentlastung bei Revisionen. Die beiden Schienenbremsen 21 befinden sich in ihrer obersten Stellung und sind durch die Hydromotoren 9 ausgeschaltet.

Bei einer Schnellbremsung fällt der Druck in der Hauptleitung 110 rasch ab. Der Schnellbremsbeschleuniger 13 verbindet die Hauptleitung 110 mit der Aussenluft und beschleunigt damit die Entleerung der Hauptleitung 110. Sobald der Hauptleitungsdruck unter 3 bar abgesunken ist, wird das Steuerventil 1 geöffnet. Bei geöffnetem Umstellventil 14 und geöffnetem Ventil 15 gelangt Druckluft aus der Speiseleitung 111 über Leitung 112 und Leitung 114 zum Druckübersetzer 17. Dadurch gelangt vom Druckübersetzer 17 Druckluft durch Leitung Z in die Senkzylinder 20 und die Schienenbremse 21 wird entgegen der Kraft einer Feder 28 auf die Schienen abgesenkt.

Gleichzeitig gelangt Druckluft aus der Speiseleitung 111 über Leitung 114 über die Microventile 18 und über das Doppelrückschlagventil 22 zum Sitzventil 6. Das Sitzventil 6 wird geöffnet, dadurch gelangt Drucköl aus dem Speicher 11 über das Sitzventil 6 und über Leitung 120 zum Sperrventil 7. Das Sperrventil 7 wird geöffnet und Drucköl gelangt aus dem Speicher 11 über Leitung 116 durch das geöffnete Sperrventil 7 zum Wegeventil 23. Das Wegeventil 23 ist beim Öffnen des Steuerventiles 1 über Leitung 114 ebenfalls vom Druck der Speiseleitung 111 beaufschlagt und so betätigt worden, dass Drucköl aus dem Speicher 11 über Leitung 116 durch das geöffnete Sperrventil 7 und über das umgeschaltete Wegeventil zum Hydromotor 9 fliesst. Der Hydromotor dreht die Magnete der Schienenbremse 21, wodurch diese eingeschaltet wird. Der Magnetfluss wird durch die Schienen geleitet und die Bremsen werden sofort voll wirksam.

Durch die Drehung der Magnete der Schienenbremse 21 werden sowohl die Microventile 18 als auch die Microventile 5 betätigt, d.h. die Microventile 18 werden geschlossen, das bewirkt, dass das Sitzventil 6 umgeschaltet wird und das Sperrventil 7 geschlossen wird. Somit wird die Verbindung vom Speicher 11 zu den Hydromotoren 9 unterbrochen. Da die Hydromotoren 9 intern nicht ganz dicht sind, werden diese Hydromotoren 9 drucklos; insbesondere wenn diese Hydromotoren 9 als Drehmotoren mit Drehmotorflügeln ausgerüstet sind. Die Magnete bleiben aber eingeschaltet, da sie durch den Magnetfluss in ihrer Lage festgehalten werden. Die Betätigung der Microventile 5 hat keine Wirkung, da bei einer Schnellbremsung durch den Speisedruck in Leitung 114 das Umkehrventil 4 geschlossen wird. Somit werden durch die Schienenbremse 21 die Microventile 5 geöffnet, ohne dass dabei Druckluft zum Sitzventil 6 gelangen kann. Dieses Sitzventil 6 hält daher das Sperrventil 7 weiterhin geschlossen. Durch diesen Bremsvorgang ist der Druck im Speicher 11 abgesunken, somit wird die Hydropumpe 10 eingeschaltet und arbeitet so lange, bis der Druck im Speicher 11 wieder auf den vorgesehenen Wert angestiegen ist.

Das Lösen der Bremse erfolgt bei einer Erhöhung des Druckes in der Hauptluftleitung 110. Sobald der Druck in der Hauptluftleitung grösser als 3,5 bar ist, schliesst sich das Steuerventil 1. Somit wird die Leitung 114 entlüftet, die zum Umstellhahn 14 und zum Doppelrückschlagventil 16 führt, und damit wird auch der Druckübersetzer 17 umgeschaltet. Dadurch wird auch die Leitung Z drucklos und die Senkzylinder 20 werden entlüftet, sodass sich die Schienenbremse 21 durch Federkraft von den Schienen abheben kann, sobald die Magnetkraft verschwindet.

Gleichzeitig werden auch die Leitungen 114 zum Wegeventil 23 und zum Umkehrventil 4 entleert. Das Wegeventil 23 wird umgeschaltet und das Umkehrventil 4 wird geöffnet. Somit gelangt Druckluft aus der Speiseleitung 111 über Leitung X und das Umkehrventil 4 sowie über die offenen Microventile 5 und über das Doppelrückschlagventil 22 zum Sitzventil 6, wodurch dieses geöffnet wird. Dadurch öffnet sich das Sperrventil 7 und Drucköl gelangt aus dem Speicher 11 über das umgeschaltete Wegeventil 23 zu den Hydromotoren 9, wodurch die Bremse 21 gelöst wird. Die Magnete der Schienenbremse 21 werden ausgeschaltet. Durch diese Drehung der Magnete der Schienenbremse 21 werden auch die Microschalter 5 und 18 wieder betätigt, d.h. die Microventile 18 werden geöffnet und die Microventile 5 werden geschlossen. Das Sitzventil 6 wird gesperrt, wodurch auch das Sperrventil 7 geschlossen wird und die Druckölzufuhr zu den Hydromotoren 9 unterbrochen wird.

Der Bremsregler 24 ermöglicht eine geschwindigkeitsabhängige Steuerung der Schienenbremse 21. Bei einer Fahrtgeschwindigkeit unter 50km/Stunde ist der Bremsdruckregler 24 geschlossen, und somit auch das Ventil 15. Eine Betätigung der Bremse durch die Hauptleitung 110 ist somit nicht möglich. Sobald die Fahrgeschwindigkeit grösser als 50km/Stunde ist, wird der Bremsregler 24 geöffnet, und durch Absenken des Druckes in der Hauptleitung 110 kann in der beschriebenen Weise gebremst werden.

Das Handventil 25 ermöglicht es, die Schienenbremse 21 von Hand zu betätigen.

Falls im Schienenfahrzeug eine hydraulische Reibungsbremse vorhanden ist, so kann der Speicher 11 zur Betätigung dieser Reibungsbremse verwendet werden.

**Ansprüche**

1. Vorrichtung zum Ein- und Ausschalten einer Permanentmagnet-Schienenbremse (21) für ein Schienenfahrzeug, das ausschliesslich mit einer pneumatischen Leitung (11) ausgerüstet ist, dadurch gekennzeichnet, dass die Permanentmagnet-Schienenbremse (21) durch einen Hydromotor (9) ein- und ausschaltbar ist, der von einer pneumatisch angetriebenen Hydropumpe (10) angetrieben ist.

2. Vorrichtung nach Anspruch 1, dadurch gekennzeichnet, dass das Schienenfahrzeug eine Hauptleitung (110) aufweist, mit welcher der Ein- und Ausschaltvorgang der Permanentmagnet-Schienenbremse (21) steuerbar ist.

3. Vorrichtung nach Anspruch 1 und 2, dadurch gekennzeichnet, dass das Schienenfahrzeug eine Speiseleitung (111) aufweist, an welche ein pneumatischer Motor (27) angeschlossen ist, mit dem die genannte Hydropumpe (10) angetrieben ist.

4. Vorrichtung nach Anspruch 1, dadurch gekennzeichnet, dass zum Absenken der Permanentmagnet-Schienenbremse (21) auf die Schienen ein pneumatisch betätigbarer Senkzylinder (20) vorhanden ist, der die Permanentmagnet-Schienenbremse (11) entgegen der Kraft einer Feder (28) absenkt.

5. Vorrichtung nach Anspruch 3, dadurch gekennzeichnet, dass mit einem pneumatisch betätigbaren Sitzventil (6) ein Sperrventil (7) betätigbar ist, das in der Leitung (116) zwischen Hydropumpe (10) und Hydromotor (9) angeordnet ist, und dass das Sitzventil (6) von einem Steuerventil (1) betätigbar ist, das in der Leitung (112,114) zwischen Speiseleitung (111) und Sitzventil (6) ageordnet ist und das durch den Druck in der Hauptleitung (110) steuerbar ist, um die Permanentmagnet-Schienenbremse (21) einzuschalten.

6. Vorrichtung nach Anspruch 5, dadurch gekennzeichnet, dass zwei durch den Hydromotor (9) betätigbare Microventile (5,18) angeordnet sind, welche ebenfalls mit dem Steuerventil (1) verbunden sind, dass das eine Microventil (5) in einer ersten Leitung (X,115) zwischen Speiseleitung (111) und Sitzventil (6) angeordnet ist, und dass das andere Microventil (18) in einer zweiten Leitung (114) zwischen Speiseleitung (111) und Sitzventil (6) angeordnet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2249476 (WERKZEUGMASCHINENFABRIK OERLIKON-BUHRLE) <br> * das ganze Dokument * <br> --- | 1 | B61H7/08 |
| A | GB-A-2053392 (MAX BAERMANN) <br> * das ganze Dokument * <br> --- | 1 | |
| A | DE-A-3446496 (DE LIMON FLUHME) <br> --- | | |
| A | US-A-3493086 (GUNTHER BRAUN) <br> --- | | |
| A | Verkehr und Technik <br> no. 6, Juni 1988, Bielefeld <br> Seiten 265 - 266; <br> "Die Permanent-Magnetschienenbremse" <br> ----- | | |

RECHERCHIERTE
SACHGEBIETE (Int. Cl.5)

B61H
H02K

Der vorliegende Recherchenbericht wurde für alle Patentansprüche erstellt

| Recherchenort | Abschlußdatum der Recherche | Prüfer |
|---|---|---|
| DEN HAAG | 22 OKTOBER 1990 | HARTEVELD C.D.H. |